# EUROPÄISCHE PATENTSCHRIFT

(11) **EP 0 715 539 B1**
(45) Veröffentlichungstag und Bekanntmachung des Hinweises auf die Patenterteilung: **07.05.1997**
(21) Anmeldenummer: 94922854.8
(22) Anmeldetag: 21.06.1994
(51) Int. Cl.: B01D 63/10, B01D 65/02

(54) **DURCH EINWIRKUNG VON HITZE STERILISIERBARER WICKELMODUL**
HEAT-STERILIZABLE COIL-WOUND MEMBRANE-FILTER CARTRIDGE
MODULE A MEMBRANES ENROULEES EN SPIRALE STERILISABLE PAR LA CHALEUR

(30) Priorität: 24.08.1993 DE 4328407
(43) Veröffentlichungstag der Anmeldung: 12.06.1996
(73) Patentinhaber: SARTORIUS AG, 37075 Göttingen (DE)
(72) Erfinder: MELZNER, Dieter, D-37075 Göttingen (DE); SCHMIDT, Hans-Weddo, D-37181 Hardegsen (DE)
(86) Internationale Anmeldenummer: EP9402014
(87) Internationale Veröffentlichungsnummer: WO9505889

(56) Entgegenhaltungen:
- EP-A- 0 478 111
- EP-A- 0 504 598
- EP-A- 0 508 646
- US-A- 4 853 128

## Beschreibung

Die Erfindung betrifft einen nach dem Cross-Flow-Prinzip zu verwendenden Wickelmodul mit Filtermembranen aus organischen Polymeren, der durch Einwirkung von Hitze sterilisierbar ist. Er besteht aus einem fluiddurchlässigen zentralen Kernrohr und einer äußeren Schutzhülle, zwischen denen Filtermembranen und Hilfselemente, wie zum Beispiel Abstandshalter, als Wickel angeordnet sind.

Sterilisierbare Filtermodule werden im Getränke-, Lebensmittel-, Pharma- und Laborbereich sowie in der Biotechnologie für Filtrationsprozesse benötigt, in denen es auf die Abtrennung von Mikroorganismen und die Vermeidung von Kontaminationen der zu filtrierenden Fluide ankommt.
Filtrationsanlagen und -module sind durch Einwirkung von Chemikalien oder durch Hitze sterilisierbar. Die Verwendung von Chemikalien ist mit einer Reihe von Nachteilen, wie zusätzlichen Spülprozessen, umweltgerechter Beseitigung der Rückstände, Schädigung der Membranen und anderer Modulelemente durch chemische Angriffe verbunden.
Bei der Sterilisation durch Einwirkung von Hitze erspart man sich das kontrollierte Ausspülen der eingesetzten Chemikalien aus der Filtrationsanlage und den Modulen und vermeidet die Rückstandsproblematik. Die Hitzesterilisation erfolgt entweder durch Beaufschlagen der Anlage mit Heißwasser von mindestens 80°C über wenigstens 30 Minuten oder durch Heißdampf bei Temperaturen zwischen 121 und 140°C. Die Heißdampfsterilisation erfogt unter Druck entweder im Batch-Autoklaven oder durch in-line-Dampfinjektion.
Bei der Heißwassersterilisation werden die meisten vegetativen Bakterien, Hefen und Schimmelpilze abgetötet, eine sichere Sterilisation wird jedoch nicht erreicht. Bei der Sterilisation im Autoklaven besteht die Gefahr der Rekontamination bei der Entnahme der Module und ihrem Anschluß an die anderen sterilisierten Anlagenteile, so daß die bevorzugte Sterilisationsmethode die in-line-Heißdampfsterilisation darstelllt.

Die nach dem Cross-Flow-Prinzip zu verwendenden Wickelmodule, die sich bisher auf dem Markt befinden, sind thermisch nicht sterilisierbar. Sie halten aufgrund ihrer Konstruktion und der verwendeten Materialien den termischen und Druckbeanspruchungen nicht stand. Die beim Autoklavieren, aber insbesondere bei der in-line Heißdampfsterilisation auftretenden Temperaturen von bis zu 140°C und Drücke von bis zu etwa 4·10⁵ Pa verursachen einerseits bei einer Reihe von Baumaterialien des Wickelmoduls aus organischen Polymeren einen starken Schrumpf von teilweise bis über 10% und andererseits eine derartige lokale radiale Ausdehnung des Wickelmoduls, daß es zu einer irreversiblen Lockerung der Wickel kommt. Durch diesen Verlust an mechanischer Stabilität werden teleskopartige Verschiebungen der Wickel hervorgerufen. Die radiale Ausdehnung und die teleskopartigen Verschiebungen der Wickel führen zu Bypässen, Verblockungen des Moduls oder zu Schädigungen des Modulaufbaus und der Membranen. Derartig geschädigte Wickelmodule sind unbrauchbar.

Die EP-A-0 504 598 beschreibt einen Wickelmodul für die Mikrofiltration von Wein, wobei die Abstandshalter und die Schutzhülle aus einem schrumpfempfindlichen Polypropylen-Netz bestehen und wobei nur das Material der Membranen hitzebeständig ist.

Die US-A-4 853 128 offenbart die Vorschrumpfung von Abstandshaltern und Membranen in einem Autoklaven, bei der Temperatur und dem Druck der Hitzesterilisation. Aus diesen vorgeschrumpften Materialen hergestellte Membranmodule sind hitzesterilisierbar. Wickelmodule mit einer Schutzhülle werden aber nicht beschrieben.

Der Erfindung liegt daher die Aufgabe zugrunde, einen ohne Umweltbelastung sterilisierbaren, mechanisch stabilen nach dem Cross-Flow-Prinzip zu verwendenden Wickelmodul mit Filtermembranen aus organischen Polymeren zu schaffen.

Die Aufgabe wird dadurch gelöst, daß der Wickelmodul durch Einwirkung von Hitze bis zu einer Temperatur von 140°C sterilisiert wird, Materialien aus organischen Polymeren für den Bau des Wickelmoduls verwendet werden, deren Schrumpf einen bestimmten Wert nicht übersteigt und der Wickelmodul mit einer Schutzhülle von erhöhter Festigkeit und Resistenz versehen ist.

Wenn die Materialien, aus denen der Wickelmodul gefertigt wird, bei Einwirkung der Sterilisationstemperatur einen Schrumpf in ihrer Länge, Breite oder Dicke von mehr als 4% besitzen, werden sie vor ihrem Einbau in den Wickelmodul getempert. Das Tempern kann entweder im Trockenschrank oder im Autoklaven bei Temperaturen zwischen 80 und 120°C über eine Zeitdauer erfolgen, die zur Erreichung der vorgegebenen maximalen Schrumpfung ausreicht. Das sind in der Regel 4 bis 8 Stunden. Bei diesem Prozeß werden die Materialien derart vorgeschrumpft, daß sie im eingebauten Wickelmodul bei den Temperaturen, die zur Hitzesterilisierung angewandt werden, keiner weiteren Schrumpfung unterliegen, die zur Zerstörung des Wickelmoduls führen würde.

Die maximale Schrumpfung der Materialien soll 4%, vorzugsweise 2%, nicht übersteigen. In Abhängigkeit von der Materialzusammensetzung können sowohl das zentrale Kernrohr, der Filtratsammler, die Membranen, die Abstandshalter und der Faden, das Gewebe oder das flächige Material, aus dem die Schutzhülle gefertigt wird, getempert werden.
Die Schutzhülle wird als Fadenwickel, gewickeltes Gewebe oder gewickeltes flächiges Material ausgebildet, wobei der Faden, das Gewebe und das flächige Material aus einem temperaturbeständigen hochfesten ersten Polymer mit einer Ummantelung aus einem thermoplastischen zweiten Polymer besteht.
Das temperaturbeständige hochfeste erste Polymer sorgt dafür, daß der Wickelmodul bei Einwirkung erhöhter Temperaturen und erhöhter Betriebsdrücke, die bei der Sterilisation auftreten, oder von Rückstaudrücken formstabil bleibt und daß eine radiale Ausdehnung und teleskopartige Verschiebung der Wickel verhindert wird.
Das thermoplastische zweite Polymer, daß das erste Polymer ummantelt, soll aufgrund seiner chemischen Beständigkeit den Kontakt aggressiver Medien, insbesondere von Säuren und Basen mit dem die mechanische Festigkeit verursachenden ersten Polymer verhindern. Andernfalls würde sich die Standzeit des Wickelmoduls durch vorzeitige Alterungs- und Zersetzungserscheinungen des ersten hochfesten Polymers erheblich verringern. Das thermoplastische zweite Polymer, gestattet außerdem eine Verschweißung der äußeren Schutzhülle auf dem Wickelmodul durch Schmelzen des thermoplastischen zweiten Polymers ohne die Verwendung eines Klebstoffs. Durch die Vermeidung von Klebstoffen zur Fixierung der äußeren Schutzhülle wird eine Kontamination der zu filtrierenden Fluide mit Fremdstoffen, die aus der Zersetzung des Klebstoffs herrühren, ausgeschlossen.

Bei dem Material, aus dem die Schutzhülle gefertigt wird, soll das Verhältnis der Materialstärken des ersten Polymers mit der Ummantelung durch das zweite Polymer zum ersten Polymer 2 : 1 bis 5 : 1 betragen. Im Falle eines Fadenwickels oder Gewebes mit einer Seele aus dem temperaturbeständigen hochfesten ersten Polymer soll das Verhältnis der Durchmesser der Seele und des Gesamtfandens vorzugsweise 1 : 2 bis 1 : 5 betragen.
Das temperaturbeständige hochfeste erste Polymer kann ein Polyester, vorzugsweise Polyethylenterephthalat oder Polybutylenterephthalat und das thermoplastische zweite Polymer kann ein Polyalken, vorzugsweise Polypropylen oder Poly(4-Methyl-1-penten) sein.

Die erfindungsgemäßen Wickelmodule werden im Autoklaven oder in-line mit Heißdampf sterilisiert. Sie sind noch nach mehr als 30 Sterilitätszyklen von 30 Minuten Dauer bei 121°C beziehungsweise 134°C mechanisch stabil, dicht, voll funktionsfähig und weiter einsetzbar.
Ist eine in-line-Heißdampfsterilisierung bei Temperaturen von mehr als 121°C gefordert, wird Polypropylen oder Poly(4-Methyl-1-penten), bevozugt Poly(4-Methyl-1-penten), als thermoplastisches und chemisch beständiges zweites Polymer verwendet.

Die Verschweißung kann rundum über die gesamte Oberfläche hinweg oder in Form einer Quernaht längs des Wickelmoduls erfolgen. In Abhängigkeit vom Modulaufbau und seiner Belastung während des Betriebs kann im Falle eines Fadenwickels eine Verschweißung des Fadens an den Enden des Wickels ausreichen.

Der Wickel wird während des Wickelvorgangs mit konstanter Krafteinwirkung gewickelt, so daß über den gesamten Modul hinweg Filtratkanäle und Überströmspalte mit annähernd gleich großen Weiten entstehen.
Durch Veränderung der Krafteinwirkung beim Aufbringen eines Fadenwickels, können aber auch in vorgegebenen Bereichen des Wickelmoduls veränderte Anpreßdrücke der äußeren Schutzhülle auf den Wickelmodul erzeugt werden.
Dadurch können Abschnitte mit sich periodisch leicht verengendem oder erweiterndem Überströmspalt erzeugt werden, die sich wegen verminderter Verblockungsneigung positiv auf die Filtrationsleistung und die Standzeit des Wickelmoduls auswirken.
Außerdem ist es zur Gewährleistung der Formstabilität möglich, die Fadenvorspannung beim Aufbringen des Fadenwickels in jenen Bereichen des Wickelmoduls, in denen die radialen Ausdehnungskräfte besonders hoch sind, zu erhöhen und/oder sie mit Mehrfachwicklungen zu versehen.
Durch Veränderung der Krafteinwirkung auf das aufzubringende Material, daß die äußere Schutzhülle des Wickelmoduls bildet, oder Aufbringen von mehr als einer Materiallage werden Toleranzen im Umfang des Wickelmoduls, einschließlich Abweichungen von der Kreisbahn des Umfangs ausgeglichen.
Solche Toleranzen treten in der Praxis vor allem dann auf, wenn für den Aufbau des Wickelmoduls Ausgangsmaterialien von unterschiedlicher Dicke eingesetzt werden. Die Toleranzen können beispielsweise durch unterschiedliche Materialstärken der verwendeten Filtermembranen oder Hilfsmittel wie Abstandshalter oder Filtratsammler verursacht worden sein.

Die Bestimmung der günstigsten Wickelspannung erfordert keine erfinderische Tätigkeit, sondern kann im Rahmen des handwerklichen Könnens ermittelt werden.
Die erfindungsgemäßen Wickelmodule sind sowohl als Ultrafiltrations- als auch als Mikrofiltrationsmodule herstellbar.
Für erfindungsgemäße Ultrafiltrations-Wickelmodule werden Ultrafiltrationsmembranen aus Materialien, ausgewählt aus der Gruppe Cellulose und Cellulosederivate, Polysulfone und Polyethersulfone verwendet.

Für erfindungsgemäße Mikrofiltrations-Wickelmodule werden Mikrofiltrationsmembranen aus Materialien, ausgewählt aus der Gruppe Celluloseester, Cellulosehydrate, Polyamide, Polysulfone, Polyethersulfone, Polyvinylidenhalide, Polytetrafluorethylene oder aus Polypropylen verwendet.
Zur Gewährleistung einer größeren Filtrationssicherheit und Sterilität werden die Membranen bevorzugt als verstärkte Membranen eingesetzt.

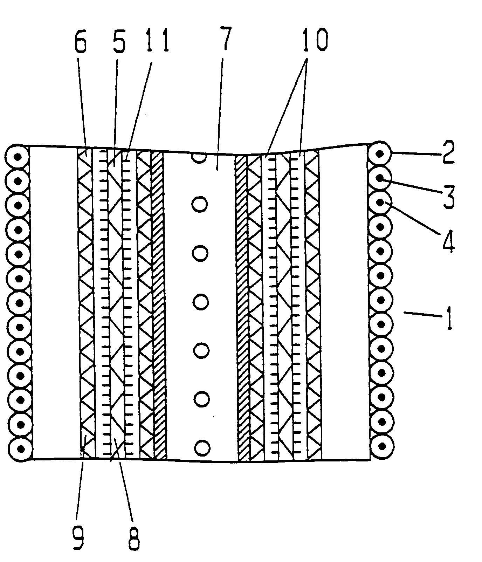

Der Gegenstand der Erfindung ist anhand der beiliegenden Zeichnung und in Ausführungsbeispielen näher erläutert.

Die Zeichnung zeigt einen Längsschnitt durch einen Wickelmodul mit einem Fadenwickel als äußere Schutzhülle.

Die äußere Schutzhülle 1 ist als helixartiger oder kreuzweiser Fadenwickel mit einstellbarer Krafteinwirkung auf den Außenbereich des Wickels des Wickelmoduls aufgebracht. Der Faden 2 besitzt eine Polyesterseele 3 aus Polyethylenterephthalat oder Polybutylenterephthalat, die von einem Polyalken 4 aus Poly(4-Methyl-1-penten) oder Polypropylen ummantelt ist. Der Durchmesser der Seele beträgt 0,4 mm, der Durchmesser des gesamten Fadens 0,8 bis 2 mm.
Der Fadenwickel ist durch Wärmeeinwirkung auf die Polyalkanummantelung des Fadens fest verschweißt und umschließt den Wickel. Dieser besteht aus Einheiten von Membrantaschen, die einen Filtratsammler 5 aus einem Gewebe aus Polypropylen oder Poly(4-Methyl-1-penten) einschließen und von einem Abstandshalter 6 aus einem Gewebe oder extrudiertem Netz aus Polypropylen oder Poly(4-Methyl-1-penten) umgeben sind. Die Einheiten sind um ein zentrales Kernrohr 7 aus beispielsweise Polyalken, vorzugsweise aus Polypropylen oder Poly(4-Methyl-1-penten), gewickelt. Der Filtratsammler 5 bildet einen Filtratkanal 8 zur Ableitung des Filtrats, während der Abstandshalter 6 den Überströmspalt 9 für das zu filtrierende Fluid bildet. Die Membranen 10 der Membrantaschen bestehen vorzugsweise aus verstärkten Membranen, die mit ihrer Verstärkungsseite 11 dem Filtratkanal 8 und mit ihrer unverstärkten filtrationswirksamen Seite dem Überströmspalt 9 zugewandt sind. Das zu filtrierende Fluid strömt tangential durch den Überströmspalt 9 über die Membranen 10 hinweg. Das durch die Membran permeierende Filtrat wird über den Filtratkanal 8 in das Kernrohr 7 geleitet und von dort abgeführt.

### Beispiel 1

Ein Mikrofiltrations-Wickelmodul mit einer Filterfläche von 5 m² bestehend aus einer Schutzhülle als helixartiger Fadenwickel mit einem Faden aus einer Seele aus Polyethylenterephthalat von 0,4 mm Durchmesser und einer Ummantelung aus Poly(4-Methyl-1-penten) von 1,2 mm Durchmesser, bei der eine Verschweißung über den gesamten Umfang des Wickels erfolgt ist, einer 0,2µm Polyethersulfon-Membran, die mit einem Polypropylenvlies verstärkt ist, einem Polypropylengewebe von 6·10⁻⁴m (600 µm) Dicke als Filtratsammler, einem extrudierten Netz aus Polypropylen von 1,05·10⁻³m (1050 µm) Dicke als Abstandshalter, einem perforierten Kernrohr aus Polypropylen, wobei die aufgeführten Materialien mit Ausnahme des Fadens für den Fadenwickel durch Autoklavieren bei 110°C über einen Zeitraum von 6 Stunden vorgeschrumpft wurden, wurde im Autoklaven bei einer Temperatur von 140°C über eine Zeitdauer von 30 Minuten sterilisiert.
Nach 20 Zyklen zeigte der Wickelmodul noch keinerlei Deformationserscheinungen. Er hatte folgende Leistungsdaten:

| | Wasser-Retentatfluß bei Δp = 1·10⁵Pa [m³/h·m²] | Wasser-Permeatfluß MTD = 1,5·10⁵Pa [m³/h·m²] | Rotwein-Permeatfluß MTD = 2,5·10⁵Pa Δp = 1·10⁵Pa retentatseitig | Trübungswert bei Rotwein [EBC]* |
|---|---|---|---|---|
| vor Sterilisierung | ca. 1,5 | 0,55 | 0,07 | 0,15 |
| nach 20 Zyklen Sterilisation | ca. 1,5 | 0,51 | 0,06 | 0,15 |

| | | | | |
|---|---|---|---|---|
| *EBC = European browery convention | | | | |

### Beispiel 2

Ein Mikrofiltrations-Wickelmodul mit einer Filterfläche von 5 m² wie in Beispiel 1 wurde in-line mit Heißdampf von 134°C über eine Zeitdauer von 30 Minuten sterilisiert.Nach 30 Zyklen zeigte der Wickelmodul noch keinerlei Deformationserscheinungen. Er hatte folgende Leistungsdaten:

| | Wasser-Retentatfluß bei Δp = 1·10⁵Pa [m³/h·m²] | Wasser-Permeatfluß MTD = 1,5·10⁵Pa [m³/h·m²] | Rotwein-Permeatfluß MTD = 2,5·10⁵Pa Δp = 1·10⁵Pa retentatseitig | Trübungswert bei Rotwein [EBC]* |
|---|---|---|---|---|
| vor Sterilisierung | ca. 1,5 | 0,55 | 0,07 | 0,15 |
| nach 30 Zyklen Sterilisation | ca. 1,5 | 0,51 | 0,06 | 0,15 |

| | | | | |
|---|---|---|---|---|
| *EBC = European browery convention | | | | |

### Beispiel 3

Ein Ultrafiltrations-Wickelmodul mit einer Filterfläche von 5 m² wie in Beispiel 1 aber mit einer mit einem Polypropylenvlies verstärkten Polyethersulfon-Membran mit einem cut-off von 300000 Dalton und Polypropylen als zweitem Polymer wurde in-line mit Heißdampf bei 121°C über eine Zeit von 30 Minuten steriliseirt.

Nach 30 Zyklen zeigte der Wickelmodul noch keinerlei Deformationserscheinungen. Er hatte folgende Leistungsdaten:

| | Wasser-Retentatfluß bei Δp = 1·10⁵Pa [m³/h·m²] | Wasser-Permeatfluß MTD = 1,5·10⁵Pa [m³/h·m²] | Rotwein-Permeatfluß MTD = 2,5·10⁵Pa Δp = 1·10⁵Pa retentatseitig | Trübungswert bei Rotwein [EBC]* |
|---|---|---|---|---|
| vor Sterilisierung | ca. 1,5 | 0,3 bis 0,4 | 0,05 bis 0,07 | 0,02 |
| nach 30 Zyklen Sterilisation | ca. 1,5 | 0,28 bis 0,37 | 0,05 bis 0,07 | 0,02 |

| | | | | |
|---|---|---|---|---|
| *EBC = European browery convention | | | | |

## Patentansprüche

1. Nach dem Cross-Flow-Prinzip zu verwendender Wickelmodul aus einem fluiddurchlässigen zentralen Kernrohr (7) und einer äußeren Schutzhülle (1), zwischen denen Filtermembranen (10) aus organischen Polymeren und Hilfselemente (5, 6) angeordnet sind, dadurch gekennzeichenet, daß
der Wickelmodul durch Einwirkung von Hitze sterilisierbar ist, die Materialien (2, 5, 6, 7 und 10) des Wickelmoduls bei der Sterilisationstemperatur einen Schrumpf von 4% oder weniger aufweisen und die Schutzhülle (1) aus einem temperaturbeständigen hochfesten ersten Polymer (3) mit einer Ummantelung aus einem thermoplastischen zweiten Polymer (4) besteht.

2. Wickelmodul nach Anspruch 1, dadurch gekennzeichnet, daß
der Wickelmodul im Autoklaven bis zu einer Temperatur von 140°C sterilisierbar ist.

3. Wickelmodul nach Anspruch 1, dadurch gekennzeichnet, daß
der Wickelmodul in-line mit Heißdampf bis zu einer Temperatur von 140°C sterilisierbar ist.

4. Wickelmodul nach Anspruch 1, dadurch gekennzeichnet, daß
die Materialien (2, 5, 6, 7 und 10) des Wickelmoduls vorgeschrumpft sein sollen, wenn sie bei der Sterilisationstemperatur einen Schrumpf von mehr als 4% aufweisen, würden.

5. Wickelmodul nach den Ansprüchen 1 bis 4, dadurch gekennzeichnet, daß
der Wickelmodul ein Mikrofiltrations-Wickelmodul ist mit Mikrofiltrationsmembranen aus Materialien, ausgewählt aus der Gruppe Celluloseester, Cellulosehydrate, Polyamide, Polysulfone, Polyethersulfone, Polyvinylidenhalide oder aus Polytetrafluorethylen.

6. Wickelmodul nach den Ansprüchen 1 bis 4, dadurch gekennzeichnet, daß
der Wickelmodul ein Ultrafiltrationswickelmodul ist mit Ultrafiltrationamembranen aus Materialien, ausgewählt aus der Gruppe Cellulose und Cellulosederivate, Polysulfone oder Polyethersulfone.

7. Wickelmodul nach Anspruch 1, dadurch gekennzeichnet, daß
die Mikrofiltrationsmembran aus Polypropylen besteht und der Wickelmodul im Autoklaven oder in-line mit Heißdampf bis zu einer Temperatur von 121°C sterilisierbar ist.

8. Wickelmodul nach Anspruch 1, dadurch gekennzeichnet, daß
die Schutzhülle (1) als Fadenwickel, Gewebe oder flächiges Material vorliegt.

9. Wickelmodul nach den Ansprüchen 1 und 8, dadurch gekennzeichnet, daß
das erste Polymer (3) ein Polyester und das zweite Polymer (4) ein Polyalken ist.

10. Wickelmodul nach Anspruch 9, dadurch gekennzeichnet, daß
das erste Polymer (3) Polyethylenterphthalat oder Polybutylenterephthalat und das zweite Polymer (4) Poly(4-Methyl-1-penten) ist.

11. Wickelmodul nach den Ansprüchen 1, 7, 8 und 9, dadurch gekennzeichnet, daß
das erste Polymer (3) Polyethylenterephthalat oder Polybutylenterephthalat und das zweite Polymer (4) Polypropylen ist.

12. Wickelmodul nach den Ansprüchen 1 bis 11, dadurch gekennzeichnet, daß
die Schutzhülle (1) ein Fadenwickel ist und daß der Faden (2) in vorgegebenen Bereichen mit veränderter Krafteinwirkung um den Wickel gewickelt ist, um einen Überströmspalt periodisch zu verengen oder zu erweitern.

13. Wickelmodul nach den Ansprüchen 1 bis 11 dadurch gekennzeichnet, daß
die Schutzhülle (1) ein Fadenwickel ist und daß der Faden (2) in vorgegebenen Bereichen mit größerer Krafteinwirkung und/oder mehrfach um den Wickel gewickelt ist, um die Formstabilität des Wickelmoduls auch in Bereichen erhöhter radialer Ausdehnung zu gewährleisten.

## Claims

1. Winding module which is to be used in accordance with the crossflow principle and consists of a fluid-permeable central core tube (7) and an outer protective casing (1), between which filter membranes (10) of organic polymers and auxiliary elements (5, 6) are arranged, characterised thereby that the winding module can be sterilised by the action of heat, the materials (2, 5, 6, 7 and 10) of the winding module have a shrinkage of 4% or less at the sterilisation temperature and the protective casing (1) consists of a temperature-resistant, high-strength first polymer (3) with a sheathing of a thermoplastic second polymer (4).

2. Winding module according to claim 1, characterised thereby that the winding module can be sterilised in an autoclave up to a temperature of 140°C.

3. Winding module according to claim 1, characterised thereby that the winding module can be sterilised in-line by superheated steam up to a temperature of 140°C.

4. Winding module according to claim 1, characterised thereby that the materials (2, 5, 6, 7 and 10) of the winding module (1) are to be preshrunk if they have a shrinkage of more than 4% at the sterilisation temperature.

5. Winding module according to claims 1 to 4, characterised thereby that the winding module is a microfiltration winding module with microfiltration membranes of materials selected from the group cellulose ester, cellulose hydrate, polyamide, polysulfone, polyethersulfone, polyvinylidene halide or of polytetrafluoroethylene.

6. Winding module according to claim 1 to 4, characterised thereby that the winding module is an ultrafiltration winding module with ultrafiltration membranes of materials selected from the group cellulose and cellulose derivative, polysulfone or polyethersulfone.

7. Winding module according to claim 1, characterised thereby that the microfiltration membranes consist of polypropylene and the winding module can be sterilised in an autoclave or in-line by superheated steam up to a temperature of 121°C.

8. Winding module according to claim 1, characterised thereby that the protective casing (1) is present as a thread winding, fabric or areal material.

9. Winding module according to claims 1 and 8, characterised thereby that the first polymer (3) is a polyester and the second polymer (4) a polyalkene.

10. Winding module according to claim 9, characterised thereby that the first polymer (3) is polyethylene terephthalate or polybutylene terephthalate and the second polymer (4) is poly(4-methyl-1-pentene).

11. Winding module according to claims 1, 7, 8 and 9, characterised thereby that the first polymer (3) is polyethylene terephthalate or polybutylene terephthalate and the second polymer (4) is polypropylene.

12. Winding module according to claims 1 to 11, characterised thereby that the protective casing (1) is a thread winding and that the thread (2) is wound around the winding in predetermined regions with varied application of force so as to periodically narrow or widen a bypass gap.

13. Winding module according to claims 1 to 11, characterised thereby that the protective casing (1) is a thread winding and that the thread (2) is wound around the winding in predetermined regions with greater application of force and/or multiply so as to guarantee the inherent stability of the winding module even in regions of increased radial stretching.

## Revendications

1. Module enroulé à utiliser selon le principe de la filtration tangentielle comprenant un noyau tubulaire central (7) perméable aux fluides et une enveloppe de protection extérieure (1) entre lesquels des membranes filtrantes (10) faites de polymères organiques et des éléments auxiliaires (5, 6) sont agencés, caractérisé en ce que le module enroulé est stérilisable par l'action de la chaleur, les matériaux (2, 5, 6, 7 et 10) du module enroulé présentent à la température de stérilisation un retrait de 4% ou moins et l'enveloppe de protection (1) se compose d'un premier polymère (3) hautement résistant à la température avec un enrobage d'un deuxième polymère thermoplastique (4).

2. Module enroulé selon la revendication 1, caractérisé en ce que le module enroulé peut être stérilisé en autoclave jusqu'à une température de 140°C.

3. Module enroulé selon la revendication 1, caractérisé en ce que le module enroulé peut être stérilisé en ligne par de la vapeur chaude jusqu'à une température de 140°C.

4. Module enroulé selon la revendication 1, caractérisé en ce que les matériaux (2, 5, 6, 7 et 10) doivent subir un préretrait lorsqu'ils présentent un retrait supérieur à 4% à la température de stérilisation.

5. Module enroulé selon les revendications 1 à 4, caractérisé en ce que ledit module enroulé est un module enroulé pour microfiltration muni de membranes de microfiltration faites de matériaux choisis dans le groupe comprenant les esters de cellulose, les hydrates de cellulose, les polyamides, les polysulfones, les polyéthersulfones, les halogénures de polyvinylidène, le polytétrafluoréthylène.

6. Module enroulé selon les revendications 1 à 4, caractérisé en ce que ledit module enroulé est un module enroulé pour ultrafiltration muni de membranes d'ultrafiltration faites de matériaux choisis dans le groupe comprenant la cellulose et les dérivés de la cellulose, les polysulfones ou les polyéthersulfones.

7. Module enroulé selon la revendication 1, caractérisé en ce que la membrane de microfiltration est en polypropylène et en ce que le module enroulé peut être stérilisé en autoclave ou en ligne par de la vapeur chaude jusqu'à une température de 121°C.

8. Module enroulé selon la revendication 1, caractérisé en ce que l'enveloppe de protection (1) se présente sous la forme d'un enroulement de fil, d'un tissu ou d'un matériau en nappe.

9. Module enroulé selon les revendications 1 et 8, caractérisé en ce que le premier polymère (3) est un polyester et le deuxième polymère (4) est un polyalcène.

10. Module enroulé selon la revendication 9, caractérisé en ce que le premier polymère (3) est du polytéréphtalate d'éthylène ou du polytéréphtalate de butylène, et en ce que le deuxième polymère (4) est du poly(4-méthyl-1-pentène).

11. Module enroulé selon les revendications 1, 7, 8 et 9, caractérisé en ce que le premier polymère (3) est du polytéréphtalate d'éthylène ou du polytéréphtalate de butylène, et en ce que le deuxième polymère (4) est du polypropylène.

12. Module enroulé selon les revendications 1 à 11, caractérisé en ce que l'enveloppe de protection (1) est un enroulement de fil et en ce que le fil (2) est bobiné dans des zones prédéterminées avec une force appliquée variable afin de rétrécir ou élargir de manière périodique une fente de débordement.

13. Module enroulé selon les revendications 1 à 11, caractérisé en ce que l'enveloppe de protection (1) est un enroulement de fil et en ce que le fil (2) est bobiné dans des zones prédéterminées avec une force appliquée plus grande et/ou plusieurs fois autour de l'enroulement afin de garantir la stabilité de forme du module enroulé y compris dans les zones de dilatation radiale élevée.
